# EUROPEAN PATENT APPLICATION

(11) **EP 3 067 313 A1**
(43) Date of publication of application: **14.09.2016**
(21) Application number: 15158311.9
(22) Date of filing: 09.03.2015
(51) Int. Cl.: B82Y 10/00, B82Y 30/00, H01M 4/134, H01L 29/06, H01L 29/16

(54) **Electrode material comprising silicon nanowires covered by mesoporous oxide nanostructured coating and ionic liguid electrolytes for energy storage applications**

(71) Applicant: CONSEJO SUPERIOR DE INVESTIGACIONES CIENTIFICAS, 28006 Madrid (ES); Commissariat à l'Energie Atomique et aux Energies Alternatives, 75015 Paris (FR)
(72) Inventor: Gomez-Romero, Pedro, 28006 Madrid (ES); Deepak P., Dubal, 28006 Madrid (ES); Bidan, Gérard, 75015 Paris (FR); Aradilla Zapata, David, 75015 Paris (FR)
(74) Representative: Pons

(57) **Abstract**

The present invention discloses a material comprising silicon nanowires and mesoporous oxide, In particular MnO2, nanostructured coatings thereon and its procedure of obtainment. Furthermore the material comprises an ionic liquid. It can be used as part of an energy storage device such as a micro-supercapacitor or a Li-ion battery.

## Description

The present invention discloses a material comprising silicon nanowires and mesoporous oxide nanostructured coatings and its procedure of obtainment. Furthermore the material comprises an ionic liquid. It can be used as part of an energy storage device such as a micro-supercapacitor or a Li-ion battery.

### BACKGROUND ART

Micro-supercapacitors are miniaturized electrochemical energy storage devices, recently developed, which can offer power densities several orders of magnitude larger than those of conventional batteries and supercapacitors due to their short ion diffusion lengths. Remarkably, such microdevices can be directly integrated into other miniaturized electronic devices such as sensors-actuators or energy-harvesting microsystems providing excellent nano-/micro-scale peak power.

Recently, great efforts have been devoted to increase the energy and power densities of micro-supercapacitors via the fabrication of nanostructured electroactive materials such as carbide-derived carbon [J. Chmiola, C. Largeot, P. L. Taberna, P. Simon, Y. Gogotsi, Science 328 (2010) 480-483], carbon onions [D. Pech, M. Brunet, H. Durou, P. Huang, V. Mochalin, Y. Gogotsi, P. L. Taberna, P. Simon. Nat. Nanotech. 5 (2010) 651-654] and the development of thin-film manufacture technologies for example electrochemical polymerization [J. H. Sung, S. J. Kim, S. H. Jeong, E. H. Kim, K. H. Lee, J. Power Sources 162 (2006) 1467-1470], inkjet printing [D. Pech, M. Brunet, P. L. Taberna, P. Simon, N. Fabre, F. Mesnilgrente, V. Conédéra, H. Durou, J. Power Sources 195 (2010) 1266-1269], and layer-by-layer assembly [M. Beidaghi, C. L. Wang, Adv. Funct. Mater. 22 (2012) 4501-4510]. In spite of such great advancements, the development of high performance micro-supercapacitors is still a challenge.

The last few years have witnessed a burst of reports on the use of silicon nanowires (SiNWs) as electrode materials for micro-supercapacitors due to their fascinating capacitive properties. These include plain SiNWs [D. Aradilla, P. Gentile, G. Bidan, V. Ruiz, P. Gómez-Romero, T. J. S. Schubert, H. Sahin, E. Frackowiak, S. Sadki, Nano Energy, 9 (2014) 273-281], as well as doped SiNWs [F. Thissandier, N. Pauc, T. Brousse, P. Gentile, S. Sadki, Nanoscale Res. Lett. 8 (2013) 38 and N. Berton, M. Brachet, F. Thissandier, J. L. Bideau, P. Gentile, G. Bidan, T. Brousse, S. Sadki, Electrochem. Commun., 41 (2014) 31-34.], silicon carbide nanowires [J. P. Alper, M. Vincent, C. Carraro, R. Maboudian, Appl. Phys. Lett., 100 (2012) 163901], porous silicon coated with gold [S. E. Rowlands, R. J. Latham, Ionics, 5 (1999) 144-149 and S. Desplobain, G. Gautier, J. Semai, L. Ventura, M. Roy, Phys. Stat. Sol. (C), 4 (2007) 2180-2184].

Important drawbacks of using SiNW electrodes in the field of electrochemical energy storage devices concern two associated phenomena: (i) the modification of the interface of silicon with the electrolyte (Solid Electrolyte Interphase, SEI); (ii), their mechanical instability associated with large volume expansion in the specific case of Li ion insertion (e.g. batteries). This SEI layer may exert a more or less protective role on the electrode structure, either for pseudocapacitor or for Li-ion batteries. Over the past years, several strategies have been reported in order to overcome these drawbacks. Thus, the electrochemical deposition of conducting polymers (e.g. poly(3,4-ethylenedioxythiophene; PEDOT) onto SiNWs exhibited an important improvement on the cycling stability of the hybrid anode (Cui et al. Energy Environ. Sci. 2012, 5, 792). Within this context, more recently the deposition of other pseudo-capacitive materials such as metallic hydroxides have emerged as a promising approach (e.g. Ni(OH)₂ Sha et al. J. Power Sources 2015, 273, 479).

Therefore, it is still a great challenge to boost the electrochemical utilization and areal specific capacitance ASC of pseudocapacitive materials by rationally designing electrodes with novel microstructures.

### SUMMARY OF THE INVENTION

The present invention discloses a material comprising silicon nanowires (SiNWs) coated with oxide nanostructures, such as MnO₂ nanoflakes, and its procedure of obtainment. The material is a novel hierarchical core-shell hetero-structure, comprising SiNWs grown on a substrate and covered by mesoporous oxide nanostructure.

Furthermore the material comprises a ionic liquid, such as a salt-doped ionic liquid, which can be used as part of an energy storage device, for instance a high performance micro-supercapacitor comprising the hierarchical core-shell hetero-structure above mentioned, wherein the mesoporous oxide nanostructured coatings covering the silicon nanowires are working as at least one of the electrodes and the ionic liquid is working as electrolyte. In another example, the mesoporous oxide nanostructured coating covering the silicon nanowires are part of a silicon anode of a Li-ion battery.

For example, an unique 3D mesoporous MnO₂@SiNWs in Li⁺-ion doped ionic liquid electrolyte can be cycled reversibly across a voltage of 2.2 V and exhibits a high areal capacitance of 13 mFcm⁻². The high conductivity of the SiNWs arrays combined with the large surface area of ultrathin MnO₂ nanoflakes are responsible for the remarkable performance of these MnO₂@SiNWs hetero-structures which exhibit high energy density and excellent cycling stability.

The present invention offers multiple noticeable advantages for micro-supercapacitors applications:
- well adhered ultrathin oxide nanostructured coatings on SiNWs enable a fast, reversible faradaic reaction, and provide a short ion diffusion path;
- the unique 3D mesoporous oxide nanostructured coating on SiNWs provides a large-area contact for the electrode and electrolyte and enables accommodation of the large volume change and release of the associated strain generated during rapid charge and discharge cycling;
- electrically conducting slim SiNWs directly grown on Si wafer serve both as the backbone and electron superhighway for charge storage and delivery
- mesoporous oxide nanostructured coating on SiNWs forming core-shell hetero-structures are strongly supported on Si wafer, avoiding the use of polymer binder/conductive additives and ensuring a sufficiently porous structure, and consequently the "inactive" surface is significantly reduced;
- Salt-doped ionic liquids and in particular Li⁺ salt-doped ionic liquid preferably used herein offers additional advantages. Thus, the ionic liquid electrolytes provide a high operating potential of the electrode of 2.2 V whereas salts such as LiClO₄ as the primary ionic working species reversibly insert into and out of lattice tunnels between the [MnO₆] octahedral subunits and cause a large amount of Mn-oxide to take part in surface redox reactions for example, in MnO₂@SiNWs electrodes.

Furthermore the present invention can also find useful application for the protection of Silicon nanowires (SiNWs) anodes in Lithium-ion batteries by using the demonstrated capacity of the mesoporous oxide layer to effectively filter Li+ ions, thus contributing to the control of the Solid Electrolyte Interphase (SEI) for application in energy storage, preferably for Li-ion batteries.

A first aspect of the present invention related to a material (hereinafter "material of the invention") characterized in that it comprises
- silicon nanowires on top of a substrate, preferably on the top of a silicon wafer, and
- a mesoporous oxide nanostructured coating covering the silicon nanowires.

In a preferred embodiment the silicon nanowires have a length of between 1 µm and 100 µm, preferably between 5 µm and 50 µm and/or have a diameter of between 5 nm and 300 nm, preferably between 20 nm and 200 nm.

In the present invention the term "mesoporous oxide nanostructured coating" refers to a coating consisting of an oxide or a mixture of oxides which forms a nanostructure; said nanostructure refers herein to thin films, nanoplatelts, nanoflakes, nanoflowers or any type of agglomerated nanoparticles. Furthermore the term "mesoporous" relates herein to a material comprising pores of mesoscopic size, with at least pores in between 2 and 50 nm, said material may also include micropores and nanopores.

In another preferred embodiment of the present invention the oxides of the mesoporous oxide nanostructured coating are selected from the list consisting of MnO₂, TiO₂, Li₄Ti₅O₁₂, V₂O₅, VO₂, CrO₂, MoO₃, WO₃, LiMn₂O₄, Fe₂O₃, Fe₃O₄, CoO, NiO, Li(Ni-Co-Mn)O₂ and a combination thereof.

Preferably, the mesoporous oxide nanostructured coating is mesoporous MnO₂ nanoflakes.

In the present invention the term "mesoporous MnO₂ nanoflakes" refers to a material containing slit-like pores, a type of porosity which can be easily understood as a result of the stacking of MnO₂ flakes. The BET surface area of the material of the invention is calculated to be in the range of between 100 m²g⁻¹ and 160 m²g⁻¹. Moreover, the Barett-Joyner-Halenda (BJH) pore size distribution curves of the material of the invention feature a distinct maximum centered at between 2 nm and 5 nm.

The mesoporosity of the material of the invention results from a combination of internal space of the agglomerated nanoflakes and surface rugosity of the individual nanoflakes. Such type of hierarchical surface morphologies with high surface area and mesoporous nature can enhance electrochemical properties since large pore channels permit rapid electrolyte transport, while the small pores provide more active sites for chemical reactions

In a preferred embodiment the mesoporous MnO₂ nanoflakes covering the silicon nanowires have a thickness of between 2 and 5 nm and/or have a lattice fringe with an interplanar spacing of between 0.2 nm and 1 nm.

In another preferred embodiment of the present invention, the material of the invention further comprises an ionic liquid on the surface of the mesoporous MnO₂ nanoflakes.

The term "ionic liquid" refers herein to a salt which is in its liquid state at room temperature.

In another preferred embodiment of the present invention, the ionic liquid forming the material of the invention is a salt-doped ionic liquid, preferably a Li⁺ salt-doped ionic liquid or an Na+ salt-doped ionic liquid.

Preferably, the ionic liquid electrolyte is selected from the list consisting of LiClO₄/propylene carbonate and LiClO₄/1-Methyl-1-propylpyrrolidinium bis(trifluromethylsulfonyl)imide. More preferably, the ionic liquid is LiClO₄/1-Methyl-1-propylpyrrolidinium bis(trifluromethylsulfonyl)imide.

Another aspect of the present invention relates to a process of obtainment of the material of the present invention (hereinafter "the process of the invention"), characterized in that it comprises the following steps:
a) growing silicon nanowires on top of a silicon wafer,
and b) growing a mesoporous oxide nanostructured coating, preferably MnO₂ nanoflakes, onto the silicon nanowires grown in step a).

Step a) is performed by a chemical vapour deposition technique, preferably by vapor-liquid-solid method via gold catalysis.

Step b) is performed by chemical bath deposition.

In a preferred embodiment, the process of the invention further comprises a step c) of adding the ionic liquid onto the mesoporous oxide nanostructured coating grown in step b).

Another aspect of the present invention relates to the use of the material of the invention comprising an ionic liquid as part of an energy storage device, preferably a micro-supercapacitor or a Li-ion battery.

The term "energy storage device" refers herein to an electrochemical energy storage device made of two identical or different electrode materials with capacitive (Double Layer) and/or pseudocapacitive storage mechanisms separated by an electrolyte. Examples of these devices are batteries and supercapacitors.

In a preferred embodiment, the mesoporous oxide nanostructured coating covering the silicon nanowires are working as at least one of the electrodes and the ionic liquid is working as electrolyte in the energy storage device. More preferably, electrodes and a separator are sandwiched; preferably the separator is polyvinylidene fluoride (PVDF).

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

FIG. 1 SEM images of the MnO_{2@}SiNWs hetero-structures prepared at different deposition times (a, b) 5 min, (c, d) 10 min, (e, f) 15 min and (g, h) 20 min at two different magnifications, respectively.
FIG. 2 a) to c) TEM and HRTEM images of the MnO₂@SiNWs core-shell hetero-structure prepared at the time interval of 15 min, SAED pattern (inset of Figure 3b) taken from the nanoflake edge.
FIG. 3 (A) XRD patterns of MnO₂ grown SiNWs at different deposition times. (B and C) core level XPS of Mn2p and Mn3s spectra for MnO₂@SiNWs hybrid materials, respectively.
FIG. 4 Nitrogen adsorption/desorption isotherm of MnO₂@SiNWs sample (synthesized at 15 min time interval) with corresponding BJH pore size distribution plot.
FIG. 5 CV curves of MnO₂@SiNWs electrodes in LiClO₄/propylene carbonate, 1-Methyl-1-propylpyrrolidinium bis(trifluromethylsulfonyl)imide (PMPyrrBTA) and LiClO₄ doped ionic liquid electrolyte (LiClO₄-PMPyrrBTA).
FIG. 6 (A) CV curves corresponding to the different MnO₂ deposition times. (B) Variation of areal capacitance with mass loading of MnO₂ on SiNWs in Li-ion doped ionic liquid electrolyte.
FIG. 7 (A, B) CVs curves of MnO₂@SiNWs (synthesized at 15 min) at different scan rates from 0.01 Vs⁻¹ to 10 Vs⁻¹. (f) Variation of areal and specific capacitance with scan rate of MnO₂@SiNWs electrodes.
FIG. 8 Repetition of the caption as Fig. 11. In this case, it should be Variation of areal and specific capacitance with scan rate for MnO2@SiNWs electrodes.
FIG. 9 Galvanostatic charge-discharge curves of MnO₂@SiNWs hybrid in Li-ion doped ionic liquid electrolyte at various current densities.
FIG. 10 (a, b) The areal, volume and specific capacitances of the MnO₂@SiNWs symmetric device measured at different current densities.
FIG. 11 Variation of areal capacitance and capacity retention with number of cycles for 5000 cycles.

### EXAMPLES

### Fabrication of a MnO₂@SiNW hybrid electrode

Firstly the fabrication of SiNWs on silicon wafer was performed. SiNWs with a length of approximately 50 µm and a diameter of 50 nm were grown in a CVD reactor (EasyTube3000 First Nano, a Division of CVD Equipment Corporation) by using the vapor-liquid-solid (VLS) method via gold catalysis on highly doped n-Si (111) substrate. Gold colloids with size of 50 nm were used as catalysts, H₂ as carrier gas, silane (SiH₄) as silicon precursor, phosphine (PH₃) as n-doping gas and HCl as additive gas. The use of HCl has been proved to reduce the gold surface migration and improve the morphology of SiNWs. Prior to the growth, wafer surface was cleaned by successive dipping in acetone, isopropanol and Caro (H₂SO₄-H₂O₂, 3:1 v/v) solutions in order to remove organic impurities, after that, the substrates were dipped in HF 10% and NH₄F solution to remove the native oxide layer. Finally, the gold catalyst was deposited on the surface. The deposition was carried out using HF 10% from an aqueous gold colloid solution. The growth was performed at 600 °C, under 6 Torr total pressure, with 40 sccm (standard cubic centimeters) of SiH₄, 100 sccm of PH₃ gas (0.2 % PH₃ in H₂), 100 sccm of HCl gas and 700 sccm of H₂ as supporting gas. The doping level (dl) of the SiNWs was managed by the pressure ratio: dopant gas/SiH₄, which was evaluated in previous works (dl: 4x10¹⁹ cm⁻³).

After the obtainment of the SiNWs, the growth of ultrathin MnO₂ nanoflakes on SiNWs was carried out by a simple chemical bath deposition (CBD) method. Briefly, 2 millimoles KMnO₄ was dissolved in 50 ml of deionized water and then 2 ml of hydrochloric acid (98 wt%) was slowly dropped into the above solution. The solution was transparent and free from any precipitate. Then, silicon wafer with pre-deposited SiNWs was immersed in the bath at a temperature of 323 K. After a few minutes, the solution became blurred and a brown precipitate was formed in the bath. During the precipitation, a heterogeneous reaction occurred and the deposition of MnO₂ took place on SiNWs. In order to get uniform coating of MnO₂, different time intervals such as 5, 10, 15 and 20 min were tested. Finally, MnO₂@SiNWs substrates were removed, rinsed, and dried in vacuum at 373 K for 2 h.

### Characterization of a MnO₂@SiNW hybrid electrode

The surface morphology was studied by scanning electron microscopy (FEI Quanta 650F Environmental SEM). TEM images were obtained with a field emission gun transmission electron microscope (Tecnai G2 F20 S-TWIN HR(S) TEM, FEI). Crystallographic study was carried out using Panalytical X'pert Pro-MRD instrument (Cu K_{α} radiation and PIXel detector). The X-ray photoelectron spectra (XPS) data were obtained by X-ray photoelectron spectroscopy (XPS, SPECS Germany, PHOIBOS 150). N₂ adsorption/desorption was determined by Brunauer-Emmett-Teller (BET) measurements using Micromeritics instrument (Data Master V4.00Q, Serial#:2000/2400).

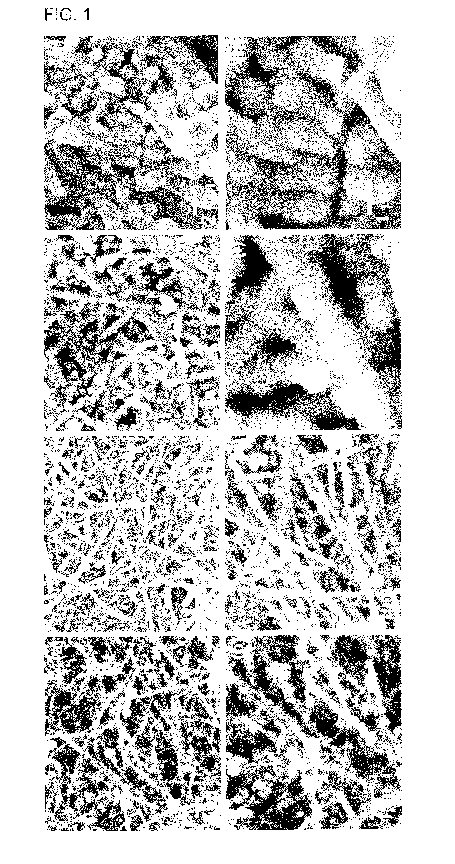

**FIG. 1** presents SEM images of the MnO₂@SiNWs hetero-structures prepared for different deposition times at two different magnifications. From **FIG. 1 a) and b)****,** one can see that surfaces of SiNWs nanowires are partly covered by MnO₂ nanoflakes after just 5 minutes of reaction. Yet, many of the nanowires remain uncoated, which indicates an insufficient deposition time. As the reaction time increased to 10 min, almost the whole surfaces of Si nanowires are homogenously covered by ultrathin MnO₂ nanoflakes (**FIG**. **1 c) and d)**). Further increase in reaction time (15 min) results in SiNWs surfaces covered by highly mesoporous MnO₂ nanoflakes (FIG. 1 e) and f), indicative of a sufficiently long reaction time with KMnO₄. On closer inspection, the individual hierarchical MnO₂@SiNWs hetero-structure is determined to have a much larger diameter (**FIG. 1** **f**)), than the pristine Si nanowires. Finally, when the reaction time is 20 min, the resulting hetero-structure is extra thick but less porous and begins to show signs of damage. Indeed, high magnification images show some cracks on the surfaces, not observed in the structures grown during shorter times and therefore most likely due to the over-loading of MnO₂ on SiNWs (FIG. 1g and h).

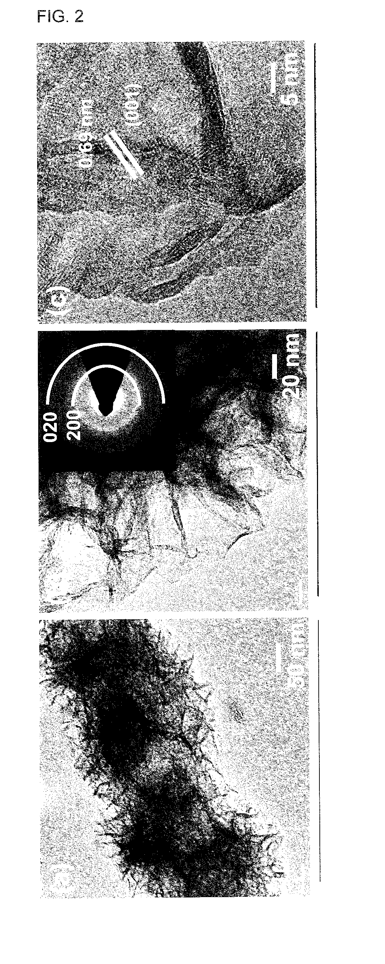

**FIG. 2 a) and b)** show TEM images of the MnO₂@SiNWs core-shell hetero-structure prepared in 15 min time. The surfaces of Si nanowires are uniformly covered by ultrathin nanoflakes (**FIG. 2 b)**). The surface of the nanoflake is highly transparent, suggesting very small thickness (~2-5 nm). Further analysis of the SAED pattern (inset of **FIG. 2 b)**) taken from the nanoflake edge reveals the formation of birnessite-type polycrystalline MnO₂. From the HRTEM image (**FIG. 2 c**)), one can clearly see the lattice fringes with an interplanar spacing of 0.69 nm for the two curling nanosheets, which is identified as the characteristic interplanar spacing of the (001) plane of birnessite-type MnO₂.

The possible growth mechanism for MnO₂@SiNWs core-shell hetero-structure is as follows: Initially, MnO₄⁻ nuclei are produced and adsorbed on surfaces of SiNWs, and forms MnO₂ nuclei. With the increase in reaction time, the MnO₂ nuclei are aggregated and transformed to nanoflakes since thermodynamically, surface energy of individual nanoflakes is high hence they start to self-aggregate. At the end, the MnO₂ nanoflake is compact and totally covers the surface of Si nanowires, resulting in the formation of the hierarchical MnO₂@SiNWs core-shell hetero-structure. Such process is supported by the morphology evolution at different growth stages via tuning the reaction time.

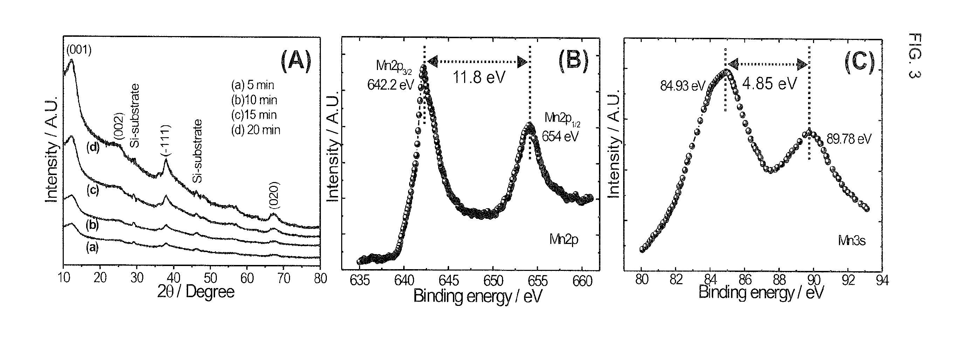

In order to determine the crystal phases present in the MnO₂@SiNWs hetero-structures, X-ray diffraction (XRD) analyses were carried out, as shown in **FIG. 3 A)****,** where XRD patterns of MnO₂ grown SiNWs at different deposition times are presented. The diffraction peaks can be indexed as (001), (002), (-111) and (020) corresponding to the birnessite manganese dioxide phase (JCPDS card no. 80-1098), and confirming the expected formation of MnO₂.

**FIG. 3 B) and C)** shows XPS spectra of the MnO₂@SiNWs, which are calibrated with reference to C1s peak at 285 eV. The Mn2p XPS spectrum exhibits two major peaks at binding energies of 642.2 and 654 eV with a spin-energy separation of 11.8 eV (**FIG. 3** **B**)). The average oxidation state of Mn in manganese oxides can be determined by the energy separation of Mn3s peaks. The MnO₂@SiNWs hybrid structures exhibit an energy separation of 4.85 eV for the Mn3s doublet **(****FIG. 3 C****)**), indicating that Mn in the hetero-structure has an oxidation state of Mn(IV).

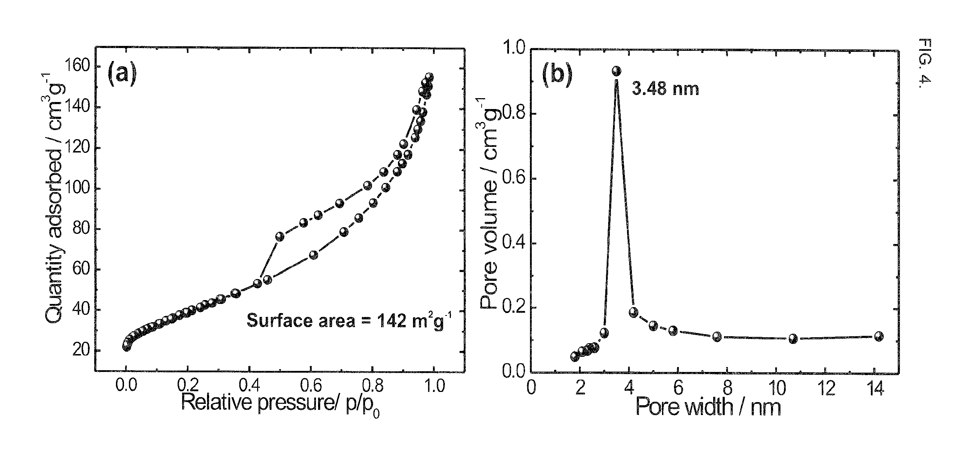

To further investigate the surface properties of hierarchical MnO₂@SiNWs core-shell hetero-structures, we performed Brunnauer-Emmett-Teller (BET) analysis on adsorption isotherms shown in **FIG. 4****.** The MnO₂@SiNWs hybrid structure shows a typical IV- type isotherm with hysteresis loop in a relative pressure (p/p₀) range of 0.4-1.0, implying the formation of slit-like pores, a type of porosity which can be easily understood as a result of the stacking of MnO₂ flakes.

The BET surface area of the MnO₂@SiNWs core-shell hetero-structure is calculated to be 142 m²g⁻¹ which is much higher than plate-like (23-43 m²g⁻¹) or comparable to nanorods (100-150 m²g⁻¹), hollow spheres (52-108 m²g⁻¹) and urchin-like (80-119 m²g⁻¹) MnO₂ structures [W. Wei, X. Cui, W. Chen, D. G. Ivey, Chem. Soc. Rev., 40 (2011) 1697-1721].

**FIG. 4 (b)** shows the Barett-Joyner-Halenda (BJH) pore size distribution curve with a distinct maximum centered at ∼3.5 nm. This confirms the mesoporous nature of MnO₂@SiNWs hybrid structure. The mesoporosity of MnO₂@SiNWs samples results from a combination of internal space of the agglomerated nanoflakes and surface rugosity of the individual nanoflakes.

### Electrochemical characterization of MnO₂@SiNW hybrid electrode

Electrochemical characterization of MnO₂@SiNW hybrid electrodes were carried out in 2-electrode configuration with Biologic VMP3 potentiostat.

All samples were measured in the typical two-electrode coin cells with MnO₂@SiNW hybrid (1 cm x 1 cm) used as both the cathode and anode electrodes. The two electrodes were sandwiched by a PVDF separator and assembled into a coin cell. The material's mass loading on the sponge is obtained by measuring the weight difference before and after MnO₂ deposition by using a microbalance.

The electrolytes used in this study include 0.1 M of LiClO₄/propylene carbonate, 1-Methyl-1-propylpyrrolidinium bis(trifluromethylsulfonyl)imide (PMPyrrBTA) (purchased from IOLITEC (Ionic Liquids Technologies GmbH, Germany) and 0.01 M LiClO₄ doped ionic liquid electrolyte (LiClO₄-PMPyrrBTA). All cells were assembled and sealed in an Argon-filled glove box.

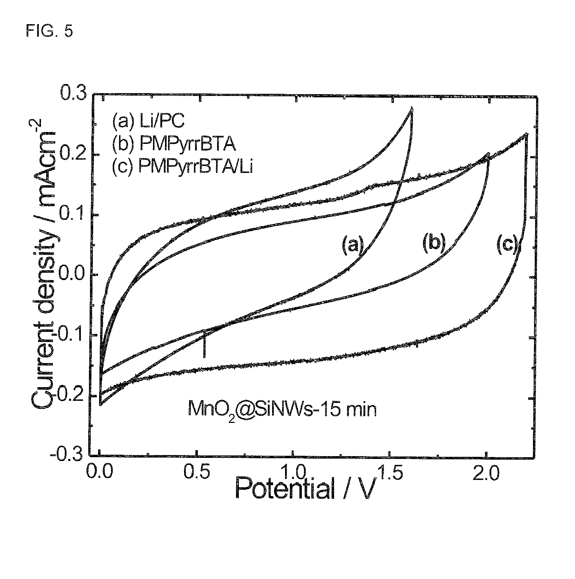

**FIG. 5** presents the CV curves of MnO₂@SiNWs electrodes in three different electrolytes, namely i) LiClO₄/propylene carbonate, ii) 1-Methyl-1-propylpyrrolidinium bis(trifluromethylsulfonyl)imide (PMPyrrBTA) and iii) LiCLO₄ doped ionic liquid electrolyte (LiClO₄-PMPyrrBTA). Although there are no distinct redox peaks, the shape of CV curve in LiClO₄/PC electrolyte deviates from the ideal rectangle, implying that the electrode shows faradic pseudocapacitive nature. However, in PMPyrrBTA, and even more clearly so in Li⁺-doped PMPyrrBTA, the shape of the CV curve is nearly rectangular, indicating that the MnO_{2@}SiNWs electrode has satisfactory capacitive behavior in these electrolytes. Furthermore, it is interesting to note that the MnO₂@SiNWs electrode in Li⁺-doped PMPyrrBTA electrolyte has a substantially larger CV area than in pure PMPyrrBTA. The rectangular CV response, which reflects the pseudocapacitive behavior, was attributed to a continuous and reversible faradic reaction of the Mn-oxide. Thus, the addition of Li salt in ionic liquid electrolyte significantly increases the electrochemical performance of the MnO₂@SiNWs electrodes.

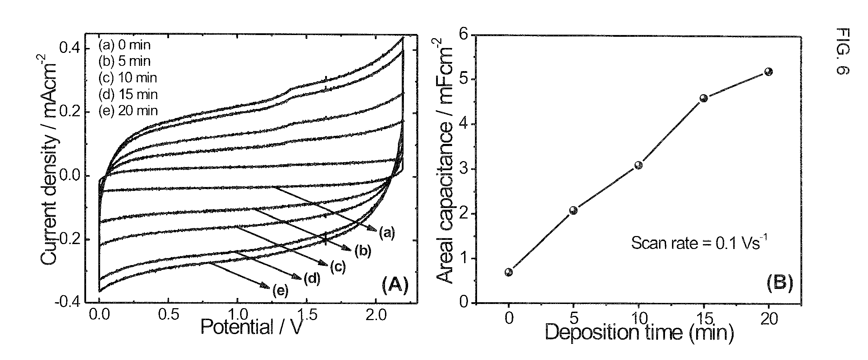

In order to investigate the relationship between the deposition time of MnO₂ and the performances of the devices, we have varied MnO₂ deposition time from 0 to 20 min. CV curves corresponding to the different MnO₂ deposition times were measured and are illustrated in **FIG 6 (A)*****.*** All the CV curves were measured at a scan rate of 100 mV/s but show obvious differences. From CV curves, it is seen that, the areal capacitance (related to the area under the CV curves) increases proportionally to deposition time up to 15 min, then gets stabilized at ca. 5.2 mFcm⁻² as deposition time reaches 20 min (**FIG. 6 B)**). We should recall that the microstructural analysis by electron microscopy indicated that the mesoporous structure of MnO₂ coating on SiNWs started to damage for deposition times longer than 15 min (see SEM micrographs in **FIG. 1****).** Hence, we can conclude that both from a microstructural and an electrochemical point of view, 15 min is an optimal deposition time for MnO₂.

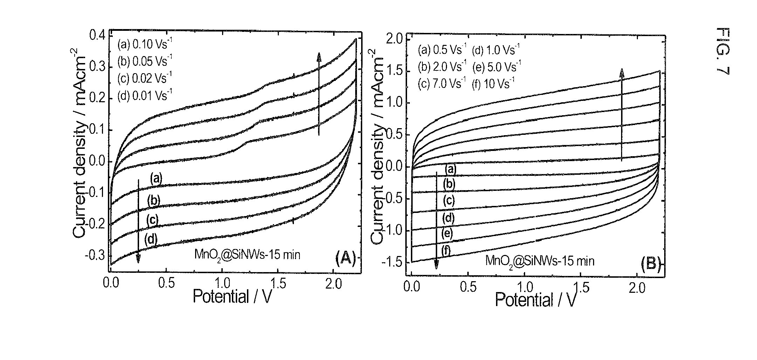

Next, in order to highlight the merits of this unique hybrid architecture, we tested the hierarchical MnO₂@SiNWs nanowires as electrodes in symmetrical supercapacitors (two-electrode configuration). A Li-ion doped ionic liquid electrolyte (LiClO₄-PMPyrrBTA) was used. **FIG 7 A) to B)** shows the cyclic voltammograms (CVs) of MnO₂@SiNWs at different scan rates from 0.01 Vs⁻¹ to 10 Vs⁻¹ suggesting that the MnO₂@SiNWs devices can be operated over a wide range of scan rates. Moreover, the CV profiles of the MnO₂@SiNWs electrodes show the rectangular shape characteristic of capacitive energy storage. This shape remains unchanged as the scan rate increases from 0.01 Vs⁻¹ to 10 Vs⁻¹, demonstrating good capacitive properties and high-rate capability. Furthermore, the area integrated within the current-potential curves greatly increases for the core-shell arrays as compared with bare SiNWs. This represents a much larger capacity for the hybrid nanowires, which must be attributed to the additional pseudocapacitance provided by the superficial intercalation of Li⁺ ions into the thin MnO₂ flakes that form the nanowires shell. Also, the high scan rate that MnO₂@SiNWs can achieve (10 Vs⁻¹) implies an ultrahigh power density for these unique core-shell hetero-structures.

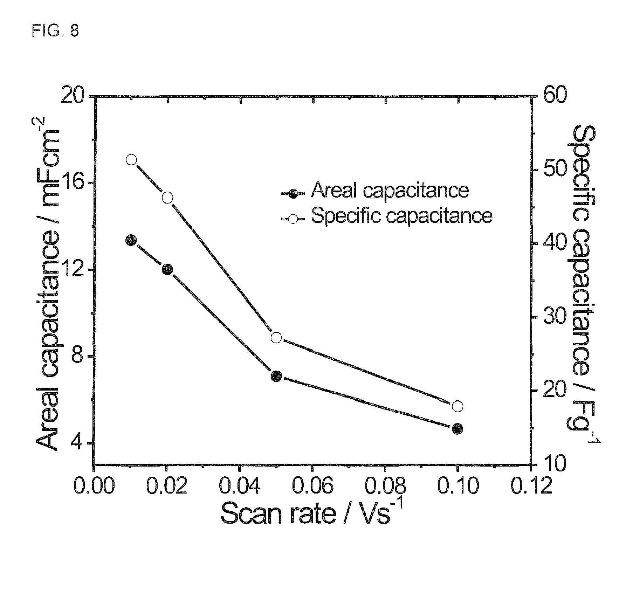

**FIG 8** shows the variation of areal and specific capacitance with scan rate for MnO₂@SiNWs electrodes. The highest areal capacitance obtained for the MnO₂@SiNWs electrode was 13.38 mFcm⁻² (51.46 Fg⁻¹, for mass loading of 0.26 mgcm⁻²) at 0.01 Vs⁻¹, which is much higher than the values obtained for the pristine SiNWs (ranging from 10-51 µFcm⁻² ) and SiNWs based nanocomposites:
- F. Thissandier, N. Pauc, T. Brousse, P. Gentile, S. Sadki, Nanoscale Res. Lett. 8 (2013) 38. (SC: 10 uF cm⁻²)
- N. Berton, M. Brachet, F. Thissandier, J. L. Bideau, P. Gentile, G. Bidan, T. Brousse, S. Sadki, Electrochem. Commun., 41 (2014) 31-34. (SC: 58 uF cm⁻²)
- J. P. Alper, M. Vincent, C. Carraro, R. Maboudian, Appl. Phys. Lett., 100 (2012) 163901 (SC: 1.7 mF cm⁻²)
- S. E. Rowlands, R. J. Latham, Ionics, 5 (1999) 144-149 (SC: 120 uF cm⁻²)
- S. Desplobain, G. Gautier, J. Semai, L. Ventura, M. Roy, Phys. Stat. Sol. (C), 4 (2007) 2180-2184 (SC: 320 uF cm⁻²)

The high areal capacitances we report here are also superior to those found for any of other recently reported hybrid nanostructures. For example MnO₂/onion like carbon (MnO₂/OLC) (7.04 mFcm⁻²) [Y. Wang, Y. Shi, C. X. Zhao, J. I. Wong, X. W. Sun, H. Y. Yang, Nanotechnol. 25 (2014) 094010], MWCNT/MnO₂ (2.43 mFcm⁻²) [L. Li, C. Chen, J. Xie, Z. Shao, F. Yang, J. Nanomaters. Volume 2013, Article ID 821071, 5 pages], CNT/MnO₂ (3.01 mFcm⁻²) [J. Ren, L. Li, C. Chen, X. Chen, Z. Cai, L. Qiu, Y. Wang, X. Zhu, H. Peng, Adv. Mater., 25 (2013) 1155-1159], or conducting polymer (PEDOT) coated SiNWs (8 mFcm⁻²) [D. Aradilla, G. Bidan, P. Gentile, P. Weathers, F. Thissandier, V. Ruiz, P. Gómez-Romero, T. Schubert, H. Sahin, S. Sadki, RSC Adv., 4 (2014) 26462-26467].

Moreover, MnO₂@SiNWs electrodes exhibit a good rate capability with capacity retention of 34.90 % of the initial capacitance as the scan rate increases from 0.01 to 0.1 Vs⁻¹. Furthermore, it should be remarked that the MnO₂@SiNWs hybrid symmetric micro-supercapacitors reported here also show better performance in terms of specific capacitance (13.9 mFcm⁻²) than interdigitated on-chip micro-supercapacitors based on carbide derived carbon films (e.g. SC: 1.5 mFcm⁻²) [P. Huang, M. Heon, D. Pech, M. Brunet, P. L. Taberna, Y. Gogotsi, S. Lofland, J. D. Hettinger, P. Simon, J. Power Sources, 225 (2013) 240-244], or onion-like carbon based micro-supercapacitor electrodes prepared by electrophoretic deposition (e.g. SC: 1.1 mFcm⁻²) [P. Huang, D. Pech, R. Lin, J. K. McDonough, M. Brunet, P. L. Taberna, Y. Gogotsi, P. Simon, Electrochem. Commun., 36, (2013) 53-56].

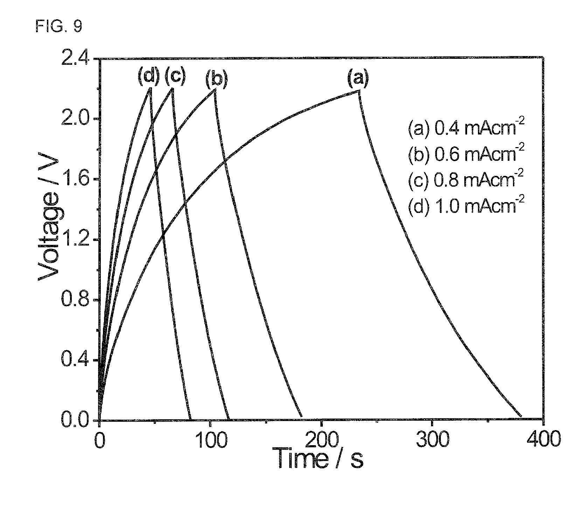

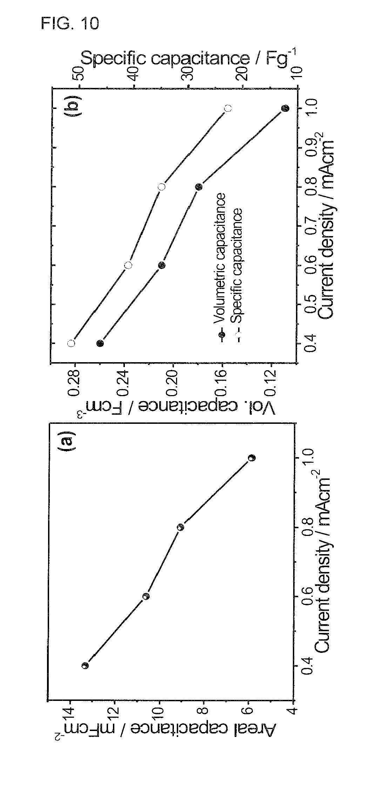

To further investigate electrochemical performances of the MnO₂@SiNWs symmetric device, we carried out galvanostatic charge-discharge cycles at various current densities **(****FIG. 9**). The charging and discharging parts of the curves are not perfectly linear which indicates a contribution from the pseudocapacitive mechanism associated to surface intercalation of Li⁺ onto MnO₂. Additionally, a very small *iR* drop (where *i* and *R* represent the current and resistance) for the MnO₂@SiNWs electrode was observed. This small ohmic drop can be the result of a series of low-resistance connections provided by the solid connection between the silicon substrate and Si nanowires, between the nanowires and MnO₂ thin sheets as well as the improved ionic conductivity resulting from the addition of a small amount of LiClO₄ to the PMPyrrBTA-ionic liquid. The areal, volume and specific capacitances of the MnO₂@SiNWs symmetric device were derived from the discharging curves measured at different current densities and are plotted in **FIG. 10 a) and b)**. Remarkably, the MnO₂@SiNWs device exhibits very high areal capacitance with values up to 13.92 mFcm⁻² (51 Fg⁻¹, 0.26 Fcm⁻³) at a current density of 0.4 mAcm⁻². These exceptionally good capacitance values can be attributed to the highly porous structure and high specific surface area which facilitate ion transfer and thus enhance redox faradaic reactions and surface adsorption of electrolyte cations.

The as-fabricated MnO₂@SiNWs symmetric device features a maximum energy density of 9.1 µWhcm⁻² (0.17 mWhcm⁻³) at a current density of 0.4 mAcm⁻², which stays in values of 4.02 µWhcm⁻² (0.07 mWhcm⁻³) at 1 macm⁻², again confirming the excellent rate performance of the MnO₂@SiNWs hybrid device. Moreover, the obtained maximum volumetric energy density is comparable to:
- carbon/MnO₂ (0.22 mWhcm⁻³) [X. Xiao, T. Li, P. Yang, Y. Gao, H. Jin, W. Ni, W. Zhan, X. Zhang, Y. Cao, J. Zhong, L. Gong, W. C. Yen, W. Mai, J. Chen, K. Huo, Y. L. Chueh, Z. L. Wang, J. Zhou, ACS Nano, 6 (2012) 9200-9206]

whereas the areal energy density is considerably higher than SiNWs and carbon based materials. For example,
- CNT/OMC (1.77 µWhcm⁻²) [J. Ren, W. Bai, G. Guan, Y. Zhang, H. Peng, Adv. Mater., 25 (2013) 5965-5970],
- graphene (0.17 µWhcm⁻²) [Y. Meng, Y. Zhao, C. Hu, H. Cheng, Y. Hu, Z. Zhang, G. Shi, L. Qu, Adv. Mater., 25 (2013) 2326-2331],
- pen ink (2.7 µWhcm⁻²) [Y. Fu, X. Cai, H. Wu, Z. Lv, S. Hou, M. Peng, X. Yu, D. Zou, Adv. Mater., 24 (2012) 5713-5718],
- CNT and Ti fibers (0.15 µWhcm⁻²) [T. Chen, L. Qiu, Z. Yang, Z. Cai, J. Ren, H. Li, H. Lin, X. Sun, H. Peng, Angew. Chem. Int. Ed., 41 (2012) 11977-11980],
- PANI/stainless steel (0.95 µWhcm⁻²) [Y. Fu, H. Wu, S. Ye, X. Cai, X. Yu, S. Hou, H. Kafafy, D. Zou, Energy Environ. Sci., 6 (2013) 805-812].

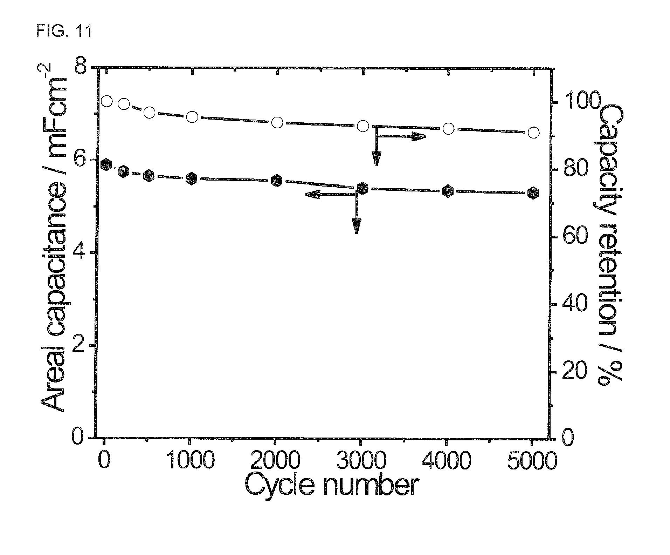

The electrochemical stability of MnO₂@SiNWs hybrid device is examined by repeated charge-discharge processes at 1 mAcm⁻². FIG 11 shows the evolution of areal capacitance and capacity retention for 5000 cycles. The areal capacitance decreases from 5.9 to 5.31 mFcm⁻² after 5000 cycles. The overall capacitance loss for MnO₂@SiNWs device is about 9.1 % (90.9 % stability) after 5000 cycles. Thus, the unique 3D hierarchical hybrid electrode shows high electrochemical stability for long cycle life applications at high current densities.

## Claims

1. Material **characterized in that** it comprises
• silicon nanowires on top of a substrate, preferably on the top of a silicon wafer, and
• a mesoporous oxide nanostructured coating, said mesoporous oxide nanostructured coating covering the silicon nanowires.

2. The material according to the preceded claim, wherein the silicon nanowires have a length of between 1 µm and 100 µm, preferably between 5 µm and 50 µm and/or have a diameter of between 5 nm and 300 nm, preferably between 20 nm and 200 nm.

3. The material according to any of claims 1 or 2, wherein the oxides of the mesoporous oxide nanostructured coating are selected from the list consisting of MnO₂, TiO₂, Li₄Ti₅O₁₂, V₂O₅, VO₂, CrO₂, MoO₃, WO₃, LiMn₂O₄, Fe₂O₃, Fe₃O₄, CoO, NiO, Li(Ni-Co-Mn)O₂ and a combination thereof.

4. The material according to any claims 1 to 3, wherein the mesoporous oxide nanostructured coating is MnO₂ nanoflakes.

5. The material according to the preceded claim, wherein the mesoporous MnO₂ nanoflakes have a BET surface area in the range of between 100 and 160 m²g⁻¹ and/or feature a Barett-Joyner-Halenda pore size distribution curves with a distinct maximum centered at between 2 nm and 5 nm.

6. The material according to any of claims 4 or 5, wherein the MnO₂ nanoflakes are covering the silicon nanowires have a thickness of between 2 and 5 nm and/or have a lattice fringe with an interplanar spacing of between 0.2 nm and 1 nm.

7. The material according to any of claims 1 to 6, which further comprises an ionic liquid on the surface of the mesoporous oxide nanostructured coating.

8. The material according to the preceded claim, wherein the ionic liquid is a salt-doped ionic liquid, preferably selected from Li-doped ionic liquid and Na-doped ionic liquid.

9. The material according to any of claims 7 or 8, wherein the ionic liquid electrolyte is selected from the list consisting of LiClO₄/propylene carbonate and LiClO₄/1-Methyl-1-propylpyrrolidinium bis(trifluromethylsulfonyl)imide, preferably the ionic liquid is LiClO₄/1-Methyl-1-propylpyrrolidinium bis(trifluromethylsulfonyl)imide.

10. A process of obtainment of the material according to any of claims 1 to 9, **characterized in that** it comprises the following steps:
a) growing silicon nanowires on top of a silicon wafer,
and b) growing a mesoporous oxide nanostructured coating onto the silicon nanowires grown in step a).

11. The process according to the preceded claim, wherein step a) is performed by a chemical vapour deposition technique, preferably by vapor-liquid-solid method via gold catalysis.

12. The process according to any of claims 10 or 11, wherein step b) is performed by chemical bath deposition.

13. The process according to any of claims 10 to 12, **characterized in that** it further comprises a step c) of adding the ionic liquid onto the mesoporous oxide nanostructured coating grown in step b).

14. Use of the material according to any of claims 1 to 13 as part of an energy storage device, preferably a micro-supercapacitor or a Li-ion battery.

15. Energy storage device **characterized in that** it comprises the material according to any of claims 7 to 9, wherein the mesoporous oxide nanostructured coating, preferably the mesoporous MnO₂ nanoflakes, covering the silicon nanowires are working as at least one of the electrodes and the ionic liquid is working as electrolyte, preferably said energy storage device **characterized in that** electrodes and a separator are sandwiched, preferably the separator is polyvinylidene fluoride.
